# EUROPEAN PATENT APPLICATION

(11) **EP 4 797 080 A1**
(43) Date of publication of application: **26.08.2026**
(21) Application number: 24887313.5
(22) Date of filing: 09.05.2024
(51) Int. Cl.: G06F 8/73

(54) **CODE GENERATION METHOD AND RELATED DEVICE**

(30) Priority: 07.11.2023 CN 202311473710; 13.03.2024 CN 202410291045
(71) Applicant: Huawei Cloud Computing Technologies Co., Ltd., Gui'an New District, Guizhou 550025 (CN)
(72) Inventor: SHEN, Bo, Guiyang, Guizhou 550025 (CN); ZHANG, Jiaxin, Guiyang, Guizhou 550025 (CN); FU, An, Guiyang, Guizhou 550025 (CN)
(74) Representative: Isarpatent
(86) International application number: PCT/CN2024/092018
(87) International publication number: WO 2025/097689

(57) **Abstract**

This application discloses a code generation method, including: A code development platform receives input information of a user in a first code file in a project, obtains an intra-file context and a first cross-file context based on a static structure of the project, obtains a second cross-file context based on a behavior feature of the user in development of the project, obtains a third cross-file context based on an evolutionary coupling degree between at least one second code file and the first code file in a code repository of the project, generates prompt information based on the input information, the intra-file context, the first cross-file context, the second cross-file context, and the third cross-file context, inputs the prompt information into a code generation model for inference, to obtain at least one group of generated code, and displays the at least one group of generated code to the user. The method uses multi-dimensional project-level contexts and a user input as inputs of the code generation model, to improve a capability of the code generation model to use a cross-file context in a code generation process and improve a code generation effect.

## Description

This application claims priorities to Chinese Patent Application No. 202311473710.1, filed with the China National Intellectual Property Administration on November 7, 2023 and entitled "CODE GENERATION METHOD AND RELATED DEVICE", and to Chinese Patent Application No. 202410291045.2, filed with the China National Intellectual Property Administration on March 13, 2024 and entitled "CODE GENERATION METHOD AND RELATED DEVICE", both of which are incorporated herein by reference in their entireties.

### TECHNICAL FIELD

This application relates to the field of artificial intelligence (artificial intelligence, AI) technologies, and in particular, to a code generation method, a code development platform, a compute device cluster, a computer-readable storage medium, and a computer program product.

### BACKGROUND

As the scale and complexity of software increase, a growing number of developers try to use code generation (Code Generation) technologies for software development. The code generation technologies aim to reduce manual programming workloads of the developers and improve code research and development efficiency, and have attracted wide attention from software engineering (Software Engineering, SE) academia and industry. In recent years, thanks to progress of artificial intelligence (artificial intelligence, AI) research in natural language processing and breakthroughs in large language models (large language models), achievements related to the large language models propel the code generation technologies from academic research to actual application, and various intelligent programming assistant products based on large language models are continuously emerging.

An intelligent programming assistant product focuses on a text-to-code conversion (Text2Code) scenario and is configured to generate code according to requirements described by the developers in natural language. Specifically, a developer completes writing of a code function comment, and triggers code generation. Then, the intelligent programming assistant product leverages a generative pre-trained transformer (Generative Pre-trained Transformer, GPT) model to generate a code snippet for implementing a function described in the comment. The intelligent programming assistant product may display the code snippet to the developer in a form of a recommendation, for the developer to decide whether to accept or reject the recommendation, or make further modifications after accepting the recommendation.

However, in real-world application-oriented code development projects, the intelligent coding assistant products deliver suboptimal code generation performance with a low code acceptance rate, making it difficult to satisfy practical service requirements.

### SUMMARY

This application provides a code generation method. In the method, awareness and extraction of an intra-file context and a cross-file context that are related to a code generation task in a project are implemented from a plurality of dimensions such as a static structure of the project, a developer behavior, and a code repository evolution history, and the foregoing multi-dimensional project-level contexts and a user input (for example, task description information in a form of a natural language and input code) are used as inputs of a code generation model, to improve a capability of the code generation model to use the cross-file context in a code generation process, and improve a code generation effect in an actual development scenario. This application further provides a code development platform corresponding to the foregoing method, a compute device cluster, a computer-readable storage medium, and a computer program product.

According to a first aspect, this application provides a code generation method. The method may be performed by a code development platform. The code development platform may be software. The software may be software that runs independently, or may be integrated into other software, for example, a functional module in an integrated development environment (integrated development environment), a plug-in integrated into an IDE, or a code editor. The software may be deployed in a compute device cluster, and the compute device cluster executes program code of a software system, to perform the code generation method in this application. In some possible implementations, the code development platform may alternatively be hardware, for example, a compute device cluster that provides a code generation capability. When the compute device cluster runs, the code generation method in this application is performed.

Specifically, the code development platform receives input information of a user in a first code file in a project, where the input information includes at least one of task description information or input code of a code generation task. Then, the code development platform obtains an intra-file context and a first cross-file context based on a static structure of the project, obtains a second cross-file context based on a behavior feature of the user in development of the project, and obtains a third cross-file context based on an evolutionary coupling degree between at least one second code file and the first code file in a code repository of the project. The intra-file context is a context in the first code file, and the cross-file context is a context in a code file other than the first code file in the project. Then, the code development platform may generate prompt information based on the input information, the intra-file context, the first cross-file context, the second cross-file context, and the third cross-file context. The code development platform inputs the prompt information into a code generation model for inference, to obtain at least one group of generated code. The code development platform may display the at least one group of generated code to the user.

In the method, awareness and extraction of the intra-file context and the cross-file context that are related to the code generation task in the project are implemented from a plurality of dimensions such as the static structure of the project, a developer behavior, and a code repository evolution history, and the foregoing multi-dimensional project-level contexts and a user input (for example, task description information in a form of a natural language and input code) are used as inputs of the code generation model, to improve a capability of the code generation model to use the cross-file context in a code generation process, and improve a code generation effect in an actual development scenario.

In some possible implementations, the code development platform may obtain the second cross-file context based on at least one of metadata of an opened code file, edit frequency of a code file in the project, or a search record of the user in development of the project, where the metadata of the opened code file includes at least one of a class, a member, or a method in the opened code file, or a relative position relationship of an editor of the opened code file.

In the method, behavior features such as the opened code file, the edit frequency, and the search record are analyzed, to be aware of focus hotspots of the user in a development process (or a programming process). In this way, a context that is helpful for code generation can be extracted from a user behavior dimension, to improve code generation quality.

In some possible implementations, the code development platform may obtain, through a behavior awareness interface, the behavior feature of the user in development of the project. In this way, a user behavior can be analyzed in the development process, which helps subsequent code generation.

In some possible implementations, the code development platform may further obtain a commit record of the code repository. The code development platform may perform evolutionary coupling analysis on the at least one second code file and the first code file in the code repository of the project based on the commit record of the code repository, to obtain the evolutionary coupling degree between the at least one second code file and the first code file. The evolutionary coupling degree represents a degree of evolutionary coupling or an evolutionary correlation degree, and may be quantized by using a probability that the first code file and the second code file are changed and committed in all commit histories.

For a code file with a high evolutionary coupling degree, a context in the code file may provide a reference for code generation in the current code file. This helps improve code generation quality in the current code file.

In some possible implementations, the code development platform may construct a project structure diagram based on the static structure of the project. The static structure includes a hierarchical structure of the project, the hierarchical structure includes a hierarchical relationship among a module, a package, a class, or a code block in the project, and the project structure diagram includes the hierarchical relationship and dependency information. The code development platform may obtain, based on a position of the code generation task in the project structure diagram, a sub-graph corresponding to the code generation task, and obtain the intra-file context and the first cross-file context based on the sub-diagram corresponding to the code generation task.

In the method, the sub-diagram corresponding to the code generation task is obtained with reference to the static structure of the project, so that a range of determining the intra-file context and the cross-file context can be narrowed down. Based on the sub-diagram, the intra-file context and the first cross-file context can be accurately extracted, to avoid interference caused by other contexts to code generation, and improve the code generation quality.

In some possible implementations, the code development platform may obtain an internal import statement of the project and the intra-file context based on the sub-diagram corresponding to the code generation task, where the intra-file context includes at least one of a library file import statement, a parent class of the code generation task, a preceding text in the first code file, or a subsequent text in the first code file. The code development platform may obtain a dependency class of the parent class based on the internal import statement of the project, and obtain the first cross-file context based on the dependency class, where the first cross-file context includes at least one of a member variable name, a method signature, a constant, and an access control keyword in the dependency class.

In the method, the internal import statement of the project, the library file import statement, the parent class of the code generation task, and the preceding text and the subsequent text in the first code file are identified by using the sub-diagram. The dependency class of the parent class may be obtained based on the foregoing internal import statement, and contexts such as the member variable name, the method signature, the constant, and the access control keyword in the dependency class are identified, to provide rich reference information for the code generation.

In some possible implementations, the code development platform may abstract at least one of the intra-file context, the first cross-file context, the second cross-file context, or the third cross-file context into a syntax-compliant interface declaration, and then generate the prompt information based on the input information and the interface declaration through prompt engineering.

In the method, a context is abstracted into an interface declaration, so that context information can be compressed. In addition, context code is abstracted into a form of the syntax-compliant interface declaration, so that programming language syntax knowledge learned by a model in unsupervised pretraining can be reused.

In some possible implementations, the code development platform may further sort cross-file contexts based on at least one of access permission, a topology distance, edit frequency, a semantic similarity, or an evolutionary coupling degree. Correspondingly, the code development platform may assemble the input information, the intra-file context, the first cross-file context, the second cross-file context, and the third cross-file context with reference to a sorting result of the cross-file contexts, to obtain the prompt information.

In consideration of a case in which a total length of contexts is excessively long, the contexts are sorted, so that the prompt information can be input into an important context without being truncated. In this way, the code generation quality can be ensured.

In some possible implementations, the code development platform may further add start flags to different types of information in the input information, the intra-file context, the first cross-file context, the second cross-file context, and the third cross-file context, to generate the prompt information.

In this way, information related to the code generation task can be explicitly provided, the capability of the code generation model to use the cross-file context in the code generation process can be improved, and the code generation effect in the actual development scenario can be improved.

In some possible implementations, the code generation model is obtained in the following manner:
obtaining training data including the cross-file contexts; and
performing direct pretraining, multi-stage pretraining, or finetuning on a base model based on the training data, to obtain the code generation model.

In comparison with adding the cross-file context only in an inference stage, this application further supports alignment between a training task and an inference task, to focus on improving context awareness and utilization capabilities of the code generation model, and achieve a better effect and better experience in actual use.

According to a second aspect, this application provides a code development platform. The code development platform includes:
an interaction module, configured to receive input information of a user in a first code file in a project, where the input information includes at least one of task description information or input code of a code generation task;
a context extraction module, configured to: obtain an intra-file context and a first cross-file context based on a static structure of the project, obtain a second cross-file context based on a behavior feature of the user in development of the project, and obtain a third cross-file context based on an evolutionary coupling degree between at least one second code file and the first code file in a code repository of the project, where the intra-file context is a context in the first code file, and the cross-file context is a context in a code file other than the first code file in the project;
a prompt module, configured to generate prompt information based on the input information, the intra-file context, the first cross-file context, the second cross-file context, and the third cross-file context; and
a generation module, configured to input the prompt information into a code generation model for inference, to obtain at least one group of generated code.

The interaction module is further configured to display the at least one group of generated code to the user.

In some possible implementations, the context extraction module is specifically configured to:
obtain the second cross-file context based on at least one of metadata of an opened code file, edit frequency of a code file in the project, or a search record of the user in development of the project, where the metadata of the opened code file includes at least one of a class, a member, or a method in the opened code file, or a relative position relationship of an editor of the opened code file.

In some possible implementations, the context extraction module is further configured to:
obtain, through a behavior awareness interface, the behavior feature of the user in development of the project.

In some possible implementations, the context extraction module is further configured to:
obtain a commit record of the code repository; and
perform evolutionary coupling analysis on the at least one second code file and the first code file in the code repository of the project based on the commit record of the code repository, to obtain the evolutionary coupling degree between the at least one second code file and the first code file.

In some possible implementations, the context extraction module is specifically configured to:
construct a project structure diagram based on the static structure of the project, where the static structure includes a hierarchical structure of the project, the hierarchical structure includes a hierarchical relationship among a module, a package, a class, or a code block in the project, and the project structure diagram includes the hierarchical relationship and dependency information;
obtain, based on a position of the code generation task in the project structure diagram, a sub-diagram corresponding to the code generation task; and
obtain the intra-file context and the first cross-file context based on the sub-diagram corresponding to the code generation task.

In some possible implementations, the context extraction module is specifically configured to:
obtain an internal import statement of the project and the intra-file context based on the sub-diagram corresponding to the code generation task, where the intra-file context includes at least one of a library file import statement, a parent class of the code generation task, a preceding text in the first code file, or a subsequent text in the first code file; and
obtain a dependency class of the parent class based on the internal import statement of the project, and obtain the first cross-file context based on the dependency class, where the first cross-file context includes at least one of a member variable name, a method signature, a constant, and an access control keyword in the dependency class.

In some possible implementations, the prompt module is specifically configured to:
abstract at least one of the intra-file context, the first cross-file context, the second cross-file context, or the third cross-file context into a syntax-compliant interface declaration; and
generate the prompt information based on the input information and the interface declaration through prompt engineering.

In some possible implementations, the prompt module is further configured to:
sort the cross-file contexts based on at least one of access permission, a topology distance, edit frequency, a semantic similarity, or an evolutionary coupling degree.

The prompt module is specifically configured to:
assemble the input information, the intra-file context, the first cross-file context, the second cross-file context, and the third cross-file context with reference to a sorting result of the cross-file contexts, to obtain the prompt information.

In some possible implementations, the prompt module is specifically configured to:
add start flags to different types of information in the input information, the intra-file context, the first cross-file context, the second cross-file context, and the third cross-file context, to generate the prompt information.

In some possible implementations, the code development platform further includes:
a training module, configured to: obtain training data including the cross-file contexts, and perform direct pretraining, multi-stage pretraining, or finetuning on a base model based on the training data, to obtain the code generation model.

According to a third aspect, this application provides a compute device cluster. The compute device cluster includes at least one compute device, and the at least one compute device includes at least one processor and at least one memory. The at least one processor and the at least one memory communicate with each other. The at least one processor is configured to execute instructions stored in the at least one memory, to cause the compute device or the compute device cluster to perform the code generation method according to any one of the first aspect or the implementations of the first aspect.

According to a fourth aspect, this application provides a computer-readable storage medium, where the computer-readable storage medium stores instructions, and the instructions instruct a compute device or a compute device cluster to perform the code generation method according to any one of the first aspect or the implementations of the first aspect.

According to a fifth aspect, this application provides a computer program product including instructions. When the computer program product runs on a compute device or a compute device cluster, the compute device or the compute device cluster is caused to perform the code generation method according to any one of the first aspect or the implementations of the first aspect.

In this application, based on the implementations according to the foregoing aspects, the implementations may be further combined to provide more implementations.

### BRIEF DESCRIPTION OF DRAWINGS

To describe technical methods in embodiments of this application more clearly, the following briefly describes the accompanying drawings for describing embodiments.
FIG. 1 is a diagram of an architecture of a code development platform according to this application;
FIG. 2 is a flowchart of a code generation method according to this application;
FIG. 3 is a diagram of a code editing interface according to this application;
FIG. 4 is a schematic flowchart of code generation in an inference stage according to this application;
FIG. 5 is a diagram of a code editing interface according to this application;
FIG. 6 is a schematic flowchart of context processing in an inference stage according to this application;
FIG. 7 is a diagram of an architecture of a model based on a transformer decoder according to this application;
FIG. 8 is a diagram of a structure of training data including a file-level context according to this application;
FIG. 9 is a diagram of a structure of training data including a cross-file context according to this application;
FIG. 10 is a diagram of a front-end interface of a code generation plug-in according to this application;
FIG. 11 is a diagram of a front-end interface of a code generation plug-in according to this application;
FIG. 12 is a diagram of comparison between code generation results according to this application;
FIG. 13 is a diagram of triggering code generation by using a human-machine interaction interface according to this application;
FIG. 14 is a diagram of constructing prompt information and generating code based on the prompt information according to this application;
FIG. 15 is a diagram of a structure of a code development platform according to this application;
FIG. 16 is a diagram of a structure of a compute device according to this application;
FIG. 17 is a diagram of a structure of a compute device cluster according to this application;
FIG. 18 is a diagram of a structure of another compute device cluster according to this application; and
FIG. 19 is a diagram of a structure of still another compute device cluster according to this application.

### DESCRIPTION OF EMBODIMENTS

In embodiments of this application, terms "first" and "second" are merely used for a purpose of description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

Code generation (Code Generation) means automatically generating code by using an automation tool or technology based on input information of a user, for example, incomplete code or natural language descriptions, to make the code complete or implement a function described in the natural language descriptions. Based on different granularities of the generated code, the code generation may include line-level code generation and method-level code (or referred to as function-level code) generation.

A large language model (Large Language Model, LLM) is a language model including artificial neural networks with many parameters (usually billions of weights or more), and uses self-supervised learning or semi-supervised learning to train a large quantity of unlabeled texts. Large language models may be classified into different types based on different model architectures. Large language models that are widely used in the code generation field include a generative pre-trained transformer (Generative Pre-trained Transformer, GPT) model.

An intelligent programming assistant product based on large language models such as the GPT supports generating, based on a comment and related information provided by a developer, a code snippet for implementing a function described in the comment. User feedback and large-scale survey results in an open beta test stage indicate that the intelligent programming assistant product can effectively reduce costs caused because the developer frequently switches between actual code writing and activities such as searching for knowledge, consulting documentation, and searching for a reusable component. In this way, software development efficiency is improved. However, in a code development project in a real application scenario, a service logic code generation effect is poor. Specifically, generated code includes a completely non-existent method or variable (which is usually referred to as hallucination in the AI field). Alternatively, existing cross-file code in the project is not properly used for code generation, leading to repeated development and increasing code complexity.

Through research, the inventors find that a code generation model in the intelligent programming assistant product is usually obtained through training based on the LLM such as the GPT, and a training and inference manner of the code generation model is derived from a natural language processing (Natural Language Processing, NLP) technology. A logic structure of a code project and a common call relationship between code file content are not fully considered. Specifically:
In a model training stage, the LLM sequentially processes a training corpora in a natural language manner. This is inconsistent with a logic habit of actual code development. In addition, the LLM performs training based on a file-level context in a text form, causing difficulty in learning and using global information such as a static structure of a project and a code call relationship.
In a model inference stage, a context range that the LLM can be aware of is limited to only a current code file. Generated code is likely to include a call to code that does not exist in the project, and existing code in the project cannot be correctly called. If the context range is expanded and the text form is still used, privacy data in user code is easily leaked.

It may be learned that, in comparison with another software development tool, the intelligent programming assistant product based on the LLM is still in an initial stage. Therefore, a solution in which a project-level context is used as an input prefix for enhancing an input of the code generation model in the inference stage, to improve a code generation effect is proposed in the industry. The solution first proposes a series of rules to define the project-level context, including a current class (Current), a parent class (Parent Class), an import class (Import Class), classes in a same package (Sibling), a class whose name is similar to that of the current class (Similar Name) in the project, a child class (Child Class), an import class of the parent class (Import of Parent Class), an import class of the classes in the same package (Import of Sibling), and the like. In addition, to resolve a problem that a context is excessively long, in the solution, specific classification is performed on context information in the code, to select a context with an appropriate length.

Based on the foregoing rules, a rule selector, for example, a multi-label classifier, is designed in the solution. Contexts with different levels and content are selected by using a combination of different rules and input into the intelligent programming assistant product, and the rule selector is optimized based on comparison between generated code of the intelligent programming assistant product and an actual code label. In the inference stage, the optimized rule selector extracts different levels of contexts for different code scenarios, combines the contexts with code near a generation point in proportion, and uses a combined context as an input of a code generation tool like the intelligent programming assistant product.

However, in the foregoing solution, a single dimension is considered, and a project static dimension is mainly considered. It is difficult to accurately locate a context range needed for a code generation task. In addition, in consideration of flexibility of a programming language and unpredictability of project code, a context range defined according to a predefined rule cannot cover various situations in an actual development scenario. Consequently, a context is easily omitted or redundant. Based on this, the foregoing solution has a limited effect on improving or bettering the code generation effect. A code acceptance rate of the generated code still cannot meet a service requirement.

In view of this, this application provides a code generation method. The method aims to alleviate a limitation of a current intelligent programming assistant in code generation from a perspective of context awareness, and proposes an intelligent awareness and dynamic construction technology for project-level contexts (including an intra-file context and a cross-file context) in object-oriented code generation. A context that helps code generation is constructed by using a multi-dimensional cross-file context awareness and extraction technology. Further, project-level context awareness and utilization capabilities of a code generation model is improved by jointly optimizing a model training stage and an inference stage, to alleviate a problem of a poor code generation effect caused by the foregoing disadvantage.

The code generation method may be performed by a code development platform. The code development platform may be software. The software may be software that runs independently, or may be integrated into other software, for example, a functional module in an integrated development environment (integrated development environment), a plug-in integrated into an IDE, or a code editor. The software may be deployed in a compute device cluster, and the compute device cluster executes program code of a software system, to perform the code generation method in this application. The software may be provided for a user in a form of a software package. For example, the software may be provided for the user as a new function of a client code editor or the IDE through iterative version updates, or may be provided for the user as a new feature of a code generation plug-in based on a pre-trained language model through iterative version updates. The user may run the software package in a local data center or a private cloud to deploy the software. Alternatively, the software may be provided for a user in a form of a cloud service, for example, software as a service (software as a service, SaaS). For example, the software may appear as an auxiliary coding function of the cloud code editor or a development environment, and expose a function interface, for example, an application programming interface (application programming interface, API), to the outside in a form of a cloud service. Another tool may use the foregoing code generation function or capability by calling the interface. In some possible implementations, the code development platform may alternatively be hardware, for example, a compute device cluster that provides a code generation capability. When the compute device cluster runs, the code generation method in this application is performed.

Specifically, the code development platform may receive input information of the user in a first code file in a project, where the input information includes at least one of task description information or input code of a code generation task. Then, the code development platform obtains an intra-file context and a first cross-file context based on a static structure of the project, obtains a second cross-file context based on a behavior feature of the user in development of the project, and obtains a third cross-file context based on an evolutionary coupling degree between at least one second code file and the first code file in a code repository of the project. The code development platform generates prompt information based on the input information, the intra-file context, the first cross-file context, the second cross-file context, and the third cross-file context, inputs the prompt information into the code generation model for inference, to obtain at least one group of generated code, and displays the at least one group of generated code to the user.

In the method, awareness and extraction of the intra-file context and a cross-file context that are related to the code generation task in the project are implemented from a plurality of dimensions such as the static structure of the project, a developer behavior, and a code repository evolution history, and the foregoing multi-dimensional project-level contexts and a user input (for example, task description information in a form of a natural language and input code) are used as inputs of the code generation model, to improve a capability of the code generation model to use the cross-file context in a code generation process, and improve a code generation effect in an actual development scenario.

In addition, in the method, the foregoing multi-dimensional cross-file contexts are introduced into a training corpus, and a task form and data distribution in the training stage are aligned with a task form and data distribution in the inference stage, to improve capabilities of the code generation model to be aware of and use the cross-file context, and further improve a code generation capability of the code generation model.

To make the technical solutions in this application clearer and easier to understand, the following first describes a system architecture of the code development platform in this application.

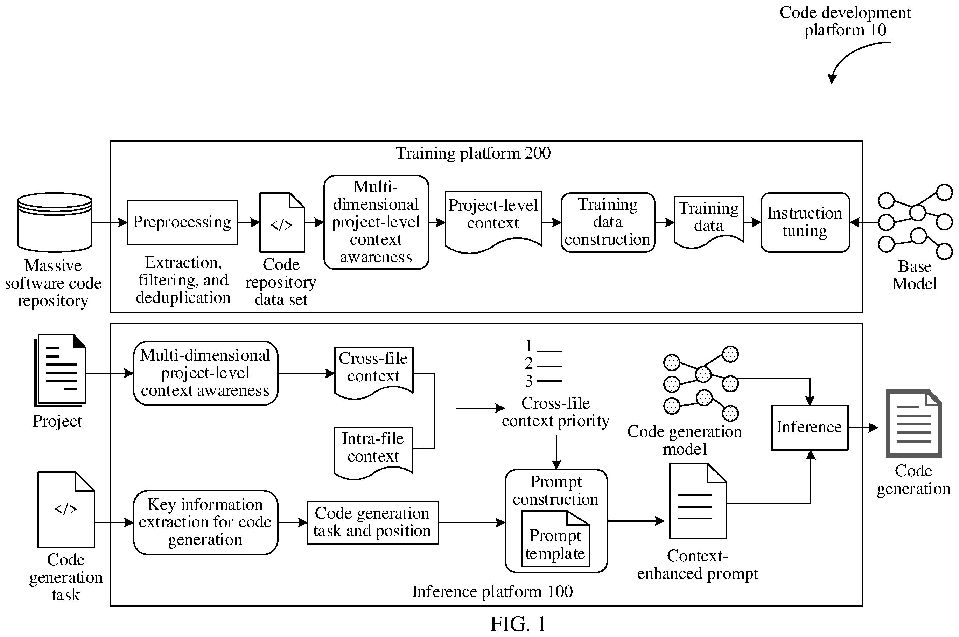

FIG. 1 is a diagram of an architecture of a code development platform. The code development platform 10 includes an inference platform 100. The inference platform 100 is configured to perform inference based on a trained code generation model, to generate code. Further, the code development platform 10 may further include a training platform 200. The training platform 200 is configured to train a base model based on a training corpus including multi-dimensional cross-file contexts, to obtain the code generation model. An inference process is performed in an inference stage, and a training process is performed in a training stage.

The inference platform 100 is configured to: for a code generation task, obtain multi-dimensional cross-file contexts from a project by using a multi-dimensional project-level cross-file context awareness technology; and for the code generation task, extract an intra-file context by using a key information extraction technology for code generation. The intra-file context is also referred to as a current file context. Specifically, the inference platform 100 may receive input information of a user in a first code file in the project, where the input information includes at least one of task description information or input code of the code generation task, then obtain an intra-file context and a first cross-file context based on a static structure of the project, obtain a second cross-file context based on a behavior feature of the user in development of the project, and obtain a third cross-file context based on an evolutionary coupling degree between at least one second code file and the first code file in a code repository of the project. The multi-dimensional cross-file contexts may include a combination of the first cross-file context, the second cross-file context, and the third cross-file context. The inference platform 100 is configured to: generate a prompt information prompt based on the input information (for example, the task description information of the code generation task and the input code), the intra-file context, and the multi-dimensional cross-file contexts (for example, the first cross-file context, the second cross-file context, and the third cross-file context), and input the prompt information into the code generation model for inference, to obtain at least one group of generated code. The generated code may be, for example, a generated line-level code snippet or a method-level code snippet. The inference platform 100 is configured to display the at least one group of generated code to the user.

In some possible implementations, the inference platform 100 is further configured to sort the multi-dimensional cross-file contexts through context priority sorting, to obtain cross-file context priorities. Correspondingly, the inference platform 100 is configured to construct, with reference to the cross-file context priorities, the input information (for example, the task description information of the code generation task and the input code), the intra-file context, and the multi-dimensional cross-file contexts into the prompt information, for example, construct a context-enhanced prompt by using a context-awareness prompt template. The prompt is further constructed with reference to a position of the code generation task, and the position of the code generation task is also referred to as a task point. It should be noted that in consideration of a case in which a total length of contexts is excessively long, the inference platform 100 sorts the contexts, so that the prompt can be input into an important context without being truncated. In some cases, for example, when the total length of the contexts is within a controllable range, the inference platform 100 may not perform the foregoing sorting process.

The code generation model may be obtained through training by the training platform 200. The training platform 200 is configured to: obtain training data including a cross-file context, for example, training data including the foregoing multi-dimensional cross-file contexts, and then perform direct pretraining, multi-stage pretraining, or finetuning on the base model based on the training data, to obtain the code generation model. FIG. 1 is an example of performing instruction tuning on the base model by the training platform 200.

During specific implementation, the training platform 200 is configured to: obtain code files of a large quantity of projects from a massive software code repository (which may also be referred to as a code repository for short), and preprocess the code files of the projects, for example, perform extraction, filtering, or deduplication, to form a code repository data set. The training platform 200 is configured to perform multi-dimensional project-level cross-file context awareness on data in the code repository data set, to extract multi-dimensional project-level cross-file contexts for a function (or method), and construct the training data based on the multi-dimensional project-level cross-file contexts. The training platform 200 may perform tokenization, coding, and partitioning on a function comment and a function declaration, an intra-file context of the function, the multi-dimensional project-level cross-file contexts, the intra-file context, and a function body, and then form an instruction (for example, a prompt in a form of the instruction). The training platform 200 is configured to perform instruction tuning on the base model by using the constructed instruction, to obtain the code generation model.

Based on the code development platform 10 shown in FIG. 1, this application provides a code generation method. The following describes the code generation method in this application with reference to the accompanying drawings.

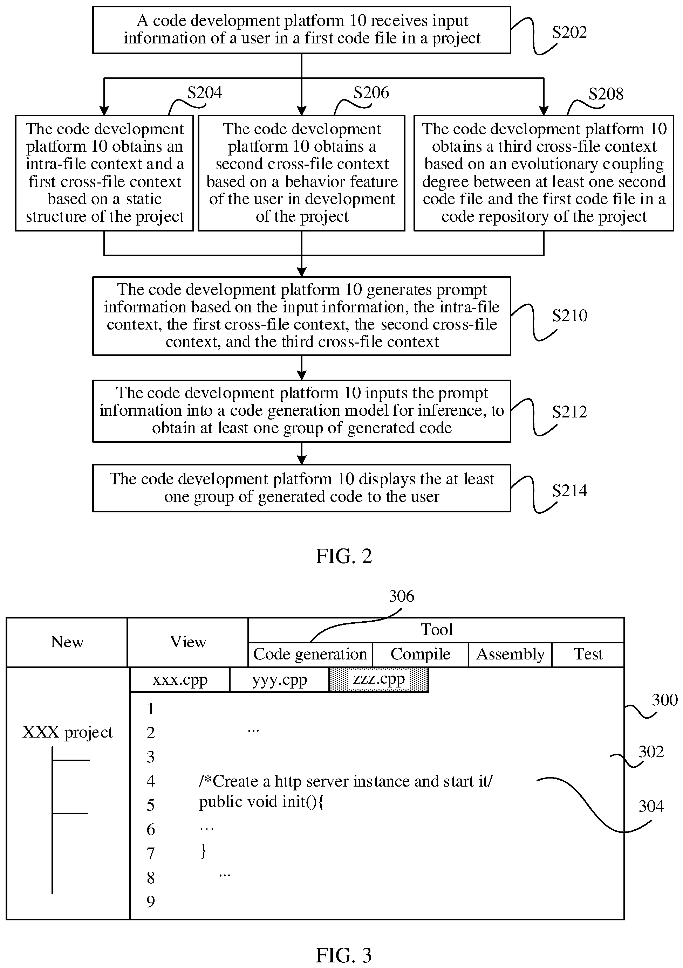

FIG. 2 is a flowchart of a code generation method. The method includes the following steps.

S202: A code development platform 10 receives input information of a user in a first code file in a project.

The project is short for software project (Software Project), and is a project file created by a developer for software to be developed during software development. The project may include a plurality of code files, for example, code files used to implement different functions or features of the software. The code files in the project may be independently developed by one user or collaboratively developed by a plurality of users. During development, the user may use a code generation capability to automatically generate code.

The first code file is used as an example for description. The input information of the user in the first code file may include at least one of task description information or input code of a code generation task. The task description information may be task descriptions in a form of a natural language. For example, when the code generation task is used to generate code of a target method or a target function, the task description information may be requirement descriptions for creating the target method or the target function, and the task description information may be usually input in a form of a comment. The input code may include a function declaration. The function declaration may include a function name and a parameter name. Correspondingly, the code generation task may be generating a code snippet of a function body.

Specifically, the code development platform 10 may display a code editing interface to the user, where the code editing interface may be a user interface of a code editor, and the code editing interface may be a graphical user interface (graphical user interface, GUI) or a command user interface (command user interface, CUI).

For ease of description, this application is described by using an example in which the code editing interface is the GUI. As shown in FIG. 3, the code editing interface 300 may include an editing window 302 for the first code file. The user may input task description information 304 into the editing window 302. The task description information 304 is used to describe code that needs to be generated. In the example, the task description information 304 may be "Create a http server instance and start it", and a method declaration 306, for example, "public void init () { }", is input. The user may trigger a code generation control 308 of the code editing interface 300, to trigger a code generation operation. Correspondingly, the code development platform 10 may receive the task description information 304 and the method declaration 306 (the input code) that are input by the user, and generate the code based on the task description information 304 and the method declaration 306.

It should be noted that FIG. 3 is merely described by using an example in which the input information of the user includes the task description information and the input code. In another possible implementation of this embodiment of this application, the input information of the user may alternatively include the task description information or include the input code. For example, when editing code of some methods, the user may directly write the methods without adding task description information in a form of a comment. For another example, when editing code of some methods, the user may add task description information in a form of a comment without inputting the code. When inputting the task description information 304 in the form of a comment, the user may first input a keyword of the comment, for example, a character "/*/", a character "@", or a character "#", and then input the task description information, to avoid executing the task description information 304 when the code file is executed.

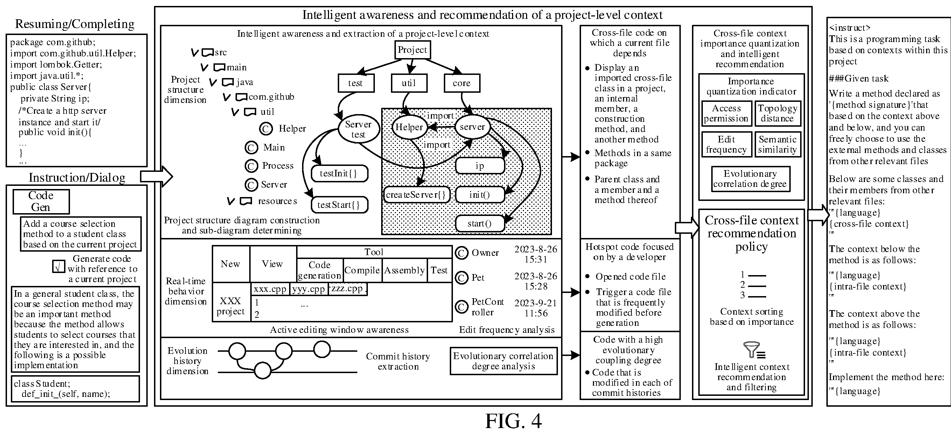

In addition, FIG. 3 is described by using an example in which the user triggers the code generation control 308 to trigger the code generation operation. During actual application, the code development platform 10 also supports triggering the code generation operation in another manner. For example, the code development platform 10 also supports triggering the code generation operation by using a shortcut key or a menu (for example, a right-click menu). Alternatively, refer to FIG. 4. When editing code in the first code file, the user may call a language model, for example, an LLM, to input the task description information and/or the input code of the code generation task in an instruction/dialog manner. In the example in FIG. 4, the task description information may be "adding a course selection method to a student class based on a current project". An interaction interface of the LLM may further include a selection control. When the selection control is selected, the LLM may generate code with reference to the current project. In this application, a manner of triggering code generation or inputting the description information and the input code of the code generation task is not limited, and may be selected based on an actual situation.

S204: The code development platform 10 obtains an intra-file context and a first cross-file context based on a static structure of the project.

The static structure of the project may include a hierarchical structure of the project. The hierarchical structure includes a hierarchical relationship among a module, a package, a class, or a code block in the project. The hierarchical structure may be represented by a tree structure (referred to as a tree for short). Specifically, the tree, with the project as a root node and the method as a leaf node, is obtained by expanding the module, the package, the class, and the code block in the project layer by layer.

The code development platform 10 may construct a project structure diagram based on the static structure of the project, where the project structure diagram includes the hierarchical relationship and dependency information. The dependency information may be dependency information between classes. Then, the code development platform 10 may obtain, based on a position of the code generation task in the project structure diagram, for example, a position of a parent class of the code generation task in the project structure diagram, a sub-diagram corresponding to the code generation task. The sub-diagram may be a local diagram that is of the project structure diagram and that is related to the code generation task.

For a folder corresponding to a project/code repository, the code development platform 10 may construct, through preprocessing, a data structure in a diagram format, which is referred to as the project structure diagram. The project structure diagram may be generated based on a project hierarchy tree, where the project hierarchy tree may be a tree of a hierarchical structure of a modeling project. Specifically, the code development platform 10 may convert, based on the project hierarchy tree, the project hierarchy tree into a project structure diagram of a hierarchy and a reference relationship between various classes in the modeling project by analyzing dependencies between classes and adding edges.

For a code generation task, the code development platform 10 may determine, based on information such as a position of the code generation task in the project structure diagram, access control permission (for example, public/private/default) of a class to which the code generation task belongs, and a hierarchy and a reference relationship related to the class, a code range that the method has permission to access or call, and the code range is represented as a sub-diagram of the project structure diagram.

The code development platform 10 may obtain the intra-file context and the first cross-file context based on the sub-diagram corresponding to the code generation task. The intra-file context is a context in the first code file. A text before the input information (or the target method) is referred to as a preceding text (or may be referred to as a previous text), and a text after the target method is referred to as a subsequent text (or may be referred to as a following text). The preceding text generally includes a package (package) statement, an import (import) statement, a signature of a parent class (a class to which the target method belongs), a part of declarations (such as a member variable, a constructor function, and a part of methods) of the parent class, and the like. The subsequent text generally includes another method declaration of the parent class. The first cross-file context is a context that is in another code file and that is obtained from the code repository from a static structure dimension. During specific implementation, the code development platform 10 may obtain, based on an edge in the project structure diagram and an import statement of the first code file (a current file), a code snippet that is of another code file in the project and that is used in the first code file. The first cross-file context may include the code snippet that is of another code file in the project and used in the first code file and that is obtained based on the import statement and the project structure diagram. As shown in FIG. 4, the first cross-file context may include at least one of an imported cross-file class in the project, a class member, or a class method. The class method may include a construction method or another method. The first cross-file context may also include code in a same package, a parent class member, and a parent class method.

The code development platform 10 may obtain, by using an analysis tool, the first cross-file context like the cross-file class in the project and the method on which the current file depends, or access, through an API provided by an IDE, for example, a program structure interface (Program Structure Interface, PSI), intermediate data obtained by the IDE by analyzing the project, to obtain the first cross-file context.

S206: The code development platform 10 obtains a second cross-file context based on a behavior feature of the user in development of the project.

The behavior feature is a feature representation of opening a code file, editing a code file, or search behavior triggered when the project is developed. The behavior feature may include at least one of metadata of an opened code file, edit frequency of the code file in the project, or a search record of the user in development of the project. The metadata of the opened code file may include at least one of a class, a member, or a method in the opened code file, or a relative position relationship of an editor of the opened code file. The relative position relationship of the editor of the opened code file may include a group to which the editor belongs and a relative position of each editor. The edit frequency of the code file may be represented by x files that have been modified recently, modification frequency, or a modification amount. The search record may be a search record of the user in a search box of the code development platform 10.

The code development platform 10 may be aware of a focus hotspot of the user in a development process (or a programming process) based on the behavior feature (for example, a real-time behavior feature) of the user in development of the project. The focus hotspot is a code file (for example, a code file other than the first code file in the project) that the user focuses on in the project. The code development platform 10 may extract cross-file code from the code file that is focused on in the project, to obtain the second cross-file context.

The code development platform 10 may provide a behavior awareness interface. For example, a code development platform like the IDE provides the API for being aware of a user behavior. The code development platform 10 may obtain, through the behavior awareness interface, the behavior feature of the user in development of the project, to obtain a cross-file context in another dimension.

S208: The code development platform 10 obtains a third cross-file context based on an evolutionary coupling degree between at least one second code file and the first code file in the code repository of the project.

Evolutionary coupling (evolutionary coupling) means that in a software revision history, a code entity pair (for example, two code entities) tends to change jointly (co-change). An evolutionary coupling relationship between a code entity X and a code entity Y may be represented by X→Y. If the code entity X changes, the entity Y also tends to change. X and Y may be at a granularity of a source file, a class, a module, a method, a variable, or the like. The evolutionary coupling degree represents a degree of the evolutionary coupling or an evolutionary correlation degree.

Specifically, the code development platform 10 may analyze, based on an evolution history of the code repository, the evolutionary coupling degree between the at least one second code file and the first code file (a file in which the code generation task is located) in the project by using an evolutionary correlation analysis method, and extract the third cross-file context from a file with a high coupling degree. The second code file may be a code file other than the first code file in the project. The high coupling degree may mean that the coupling degree is higher than a specified value, or the coupling degree ranks top k when coupling degrees are sorted in descending order. In some examples, the third cross-file context may be a code snippet in a code file that has been modified in each of commit histories.

The code development platform 10 may obtain a commit record of the code repository, for example, a git commit record. Then, the code development platform 10 may perform evolutionary coupling analysis on the at least one second code file and the first code file in the code repository of the project based on the commit record of the code repository, to obtain the evolutionary coupling degree between the at least one second code file and the first code file.

S204, S206, and S208 may be performed in parallel, or may be performed in a specified sequence. This is not limited in this embodiment of this application.

S210: The code development platform 10 generates prompt information based on the input information, the intra-file context, the first cross-file context, the second cross-file context, and the third cross-file context.

Specifically, the code development platform 10 may separately fill the input information, the intra-file context, the first cross-file context, the second cross-file context, and the third cross-file context into corresponding positions in a prompt template, to generate a prompt. As shown in FIG. 4, the prompt template may include instruction filling indication information and context filling indication information. In an inference stage, the instruction filling indication information may indicate to fill the input information of the user, for example, the task description information and the input code, and the context filling indication information may indicate to fill the intra-file context, the first cross-file context, the second cross-file context, and the third cross-file context. Further, the context filling indication information may be further classified into intra-file context (intra-file context) filling indication information and cross-file context (cross-file context) filling indication information. The intra-file context filling indication information may include subsequent text filling indication information and preceding text filling indication information.

In some possible implementations, the prompt template may further include a system prompt (system prompt). For example, the system prompt in FIG. 4 may be used to prompt that a task is a programming task based on a project-level context. To align a task in the inference stage with a task in a training stage, the training stage and the inference stage may share the prompt template. Based on this, the prompt template may further include generated code filling indication information, indicating a filling position at which the generated code is expected to be filled.

Because an input length of a code generation model (usually a language model, for example, the LLM) is limited to some extent (referred to as a window size, which usually ranges from 1024 to 8192), when the input length is limited, a length of the project-level context may exceed a limit of the input length of the code generation model. Based on this, this application may further support sorting of cross-file contexts, to reduce a probability that an important context is deleted according to a truncation policy when an input is excessively long. The code development platform 10 may sort the cross-file contexts based on at least one of access permission, a topology distance, edit frequency, a semantic similarity, or an evolutionary coupling degree (or referred to as evolutionary correlation or an evolutionary correlation degree). The topology distance is a probability relative to a physical distance. The physical distance may be a distance between the target method and a context in the code file. The topology distance may be a distance between the target method and a context in the project structure diagram. The distance may be represented by a hop count (or a quantity of nodes between the target method and the context). Correspondingly, the code development platform 10 may assemble the input information, the intra-file context, the first cross-file context, the second cross-file context, and the third cross-file context with reference to a sorting result of the cross-file contexts, to obtain the prompt information. The code development platform 10 quantifies importance degrees of different cross-file contexts to the code generation task comprehensively based on indicators such as the access permission, the topology distance, the edit frequency, the semantic similarity, and the evolutionary correlation, and sorts the cross-file contexts based on the importance degrees (importance), to prevent an important cross-file context from being truncated due to an excessively long input.

Further, if original code is directly used as the context, redundant information may be introduced, and an amount of context information that can be used by the code generation model is limited. Consequently, context utilization efficiency is reduced. Therefore, the code development platform 10 further supports direct abstraction on the context, for example, abstracting at least one of the intra-file context, the first cross-file context, the second cross-file context, or the third cross-file context into a syntax-compliant interface declaration (Interface Declaration). The code development platform 10 may reserve the hierarchical structure and an identifier (Identifier, ID) by removing at least one of a comment, a variable assignment, and a method body, where the reserved ID may include a method name and a parameter name. Correspondingly, the code development platform 10 may generate the prompt information based on the input information and the interface declaration through prompt engineering. The code development platform 10 may filter out, from an abstracted context (for example, the interface declaration) based on an identifier similarity, a context (or an interface declaration) related to a current method (for example, the target method), for example, a part that is most probably related to the current method, to implement intelligent context recommendation and filtering. Further, the code development platform 10 may adjust the context or interface declaration that is filtered out to a position before the user input (for example, the task description information), and organize positions of the contexts in the prompt in descending order of context importance, to reduce a probability that the important context is truncated, and increase a weight of the important context on code generation (for example, generation of a method body of the target method).

The code development platform 10 abstracts the context into the interface declaration, so that context information can be compressed. In addition, the code development platform 10 abstracts context code into a form of a syntax-compliant interface declaration, so that programming language syntax knowledge learned by a model in unsupervised pretrain can be reused.

In some possible implementations, the code development platform 10 may add start flags to different types of information in the input information, the intra-file context, the first cross-file context, the second cross-file context, and the third cross-file context, to generate the prompt information. In this way, information related to the code generation task can be explicitly provided, a capability of the code generation model to use the cross-file context in a code generation process can be improved, and a code generation effect in an actual development scenario can be improved.

S212: The code development platform 10 inputs the prompt information into the code generation model for inference, to obtain at least one group of generated code.

The code generation model is a language model configured to generate code based on input information of a user. In consideration of a code generation effect, the language model may be a causal language model based on a transformer decoder (Decoder) architecture, for example, an LLM of a GPT architecture. This type of model may accept a code sequence as an input, predict a next token (token) in the code as an output in an autoregressive mode, and use the output as a next input (that is, execute a next token prediction task).

The code development platform 10 inputs the prompt information into the code generation model, and the code generation model may perform inference on subsequent code of the input code with reference to multi-dimensional project-level contexts in the prompt information, to obtain the at least one group of generated code.

S214: The code development platform 10 displays the at least one group of generated code to the user.

Specifically, the code development platform 10 may display the at least one group of generated code to the user on a code editing interface of the first code file. When obtaining a plurality of groups of generated code through inference for the code generation task, the code development platform 10 may display the generated code with reference to probabilities.

In some possible implementations, the code development platform 10 may sort the generated code based on the probabilities, and the code development platform 10 may display generated code with a high probability. When the user triggers an operation of viewing a next group of generated code, the code development platform 10 displays generated code whose probability ranking result is after that of currently generated code.

In some other possible implementations, the code development platform 10 may alternatively display a plurality of groups of generated code at a time. Specifically, the code development platform 10 may sort the generated code based on probabilities, and display top n generated code at a time based on a sorting result.

Further, the code development platform 10 may further receive feedback of the user on the generated code, where the feedback may include acceptance, rejection, or revision of the generated code. When the user determines that the generated code is available, the user may accept a second code snippet; when the user determines that the generated code is unavailable, the user may reject a second code snippet; or when the user determines that the generated code is partially available, the user may revise the generated code.

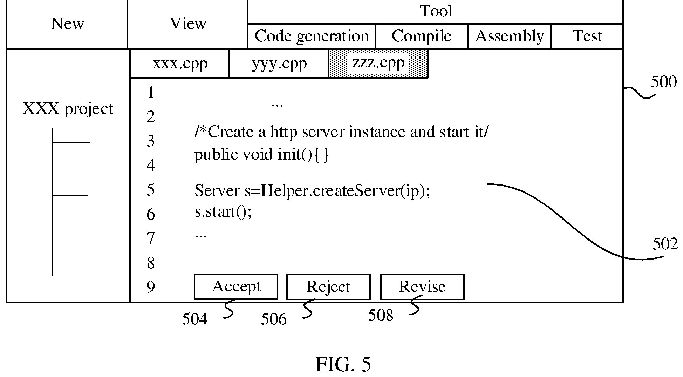

As shown in FIG. 5, the code development platform 10 may display a code editing interface 500 to the user. The code editing interface 500 includes generated code 502 and a feedback control corresponding to the generated code 502. The feedback control may include an accept control 504, a reject control 506, and a revise control 508. The user may perform different types of feedback, such as acceptance, rejection, or revision, on the generated code 502 by triggering different types of feedback controls. Further, the code editing interface 500 may further include a coding process analysis 503 for the generated code 502. In this way, the user may determine, based on the coding process analysis 503, whether the generated code 502 meets a requirement, and further determine a feedback type for the generated code 502.

In some possible implementations, when the feedback is rejection or revision, the code development platform 10 may further update the code generation model based on the feedback of the user on the generated code 502. For example, the code development platform 10 may construct revised code, related input information, and a context as training data, and update the training data to a training data set, for subsequently updating the code generation model. In this way, inference accuracy of the code generation model can be improved, and output accuracy can be improved.

In comparison with file-level context awareness, the code generation method in this application considers a project-level context range and diversity of types, and therefore expands a context range to the entire project, which is closer to a background knowledge range needed by a human developer in actual programming. In addition, the contexts are extracted from a plurality of dimensions for the entire project, so that accurate awareness and obtaining of the project-level context that is helpful to the current code generation task can be implemented for code generation. This improves a code generation effect of the code generation model in an actual development scenario, especially a capability of generating object-oriented programs and code that depends on a customized type/method, and greatly improves a generation effect of object-oriented code.

Further, in comparison with uploading the context to a server in a plain text form and inputting the context into the code generation model, this application supports preprocessing the context locally by the user, for example, abstracting the context into the interface declaration. In this way, a context length is reduced, and a context of a larger range is allowed to be included in an input with a same length. In addition, a risk of privacy data leakage in the user code is reduced to some extent.

The code generation method is described in the embodiment in FIG. 2. The following describes a multi-dimensional project-level context awareness and extraction process, a context importance quantization and intelligent recommendation process, and a context reorganization process in the code generation method with reference to an example.

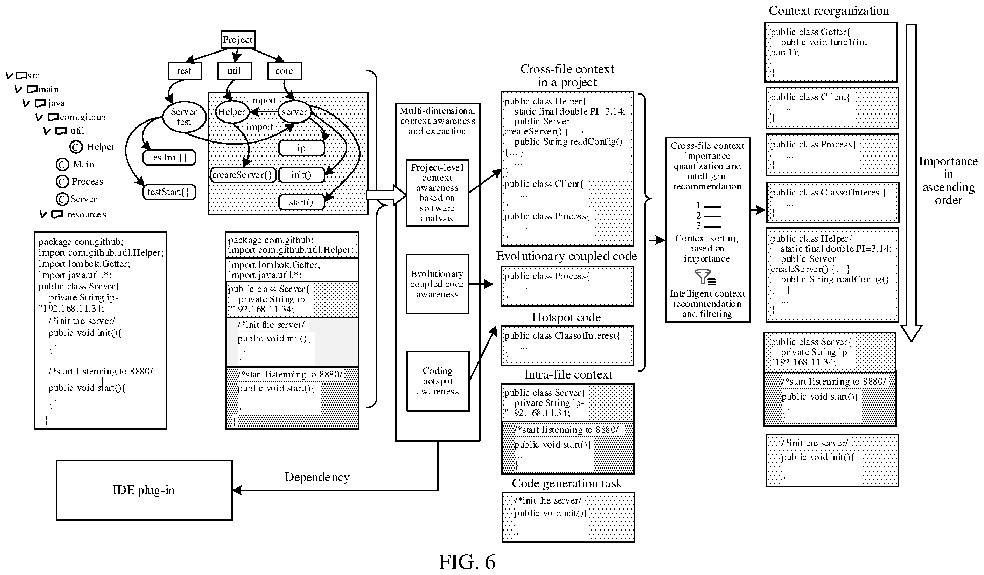

FIG. 6 is a schematic flowchart of context processing in an inference stage. The following stages may be specifically included.

Stage 1: A code development platform 10 constructs a project structure diagram, and determines a sub-diagram from the project structure diagram.

Specifically, for a project, the code development platform 10 (for example, an IDE) usually provides a more powerful and accurate project-level analysis tool, and may analyze an opened project (for example, a current project) as a whole. An analysis result may be used as a source of a context in the inference stage through a plug-in API. The analysis result may include a hierarchy and dependency information (for example, a reference relationship) between various classes in the project. The code development platform 10 may use the analysis result as a project index, and cache the project index.

The code development platform 10 may obtain a project hierarchy tree (for example, a project structure in FIG. 6), and add an edge to the project hierarchy tree based on the project index or cache, to convert the project hierarchy tree into a project structure diagram of a hierarchy and a reference relationship between various classes in a modeling project. For a code generation task, the code development platform 10 may determine, based on information such as a position of the code generation task (for example, a target method requested to be generated) in the project structure diagram, access control permission (for example, public/private/default) of a class to which the code generation task belongs, and a hierarchy and a reference relationship related to the class, a code range that the method has permission to access or call. As shown in FIG. 6, the code range may be represented by a sub-diagram of the project structure diagram. Based on this, the sub-diagram may also be referred to as a context range diagram.

In comparison with using a syntax tree parser, in this application, the project index or the cache provided by the IDE can be effectively used. In this way, a more accurate and complete analysis result can be provided, to improve accuracy of code generation. In addition, additional analysis costs are caused (considering that code generation is usually an activity with a high real-time requirement and a model needs time for inference, the method uses the project index and does not need additional analysis, which shortens response time and avoids a cost increase caused by additional analysis).

In this stage, the code development platform 10 may further obtain a code commit record for subsequent evolutionary coupling analysis.

Stage 2: The code development platform 10 performs intra-file code partitioning.

The code development platform 10 partitions a source code file (for example, a first code file) in which the code generation task is located. A text before the target method is referred to as a preceding text, and a text after the target method is referred to as a subsequent text. The preceding text generally includes a package statement, an import statement, a signature of the belonged class, a part of declarations (such as a member variable, a constructor function, and a part of methods) of the belonged class, and the like. The subsequent text generally includes another method declaration of the belonged class.

The import statement may be further classified into an internal import statement of the project and a library file import statement. The internal import statement of the project is used to import another code file in the project. The library file import statement is used to import a standard library or a third-party library. Because the internal import statement of the project may be used to determine a cross-file context, the code development platform 10 may partition or divide the internal import statement of the project and the library file import statement. As shown in FIG. 6, the code development platform 10 may partition the preceding text, input information, and the subsequent text in the first code file. The preceding text may be further divided into a partition of a package statement and the internal import statement of the project, a partition of the library file import statement, and a partition of a part of declarations of the belonged class. Different partitions may be distinguished by using different styles, for example, different filling colors.

Stage 3: The code development platform 10 may obtain multi-dimensional project-level contexts through multi-dimensional project-level context awareness and extraction.

Specifically, the code development platform 10 may obtain, based on an edge in the project structure diagram and an import statement of the first code file, for example, the internal import statement of the project, code content that is of another code file in the project and that is used in a first file, to obtain a first cross-file context.

The code development platform 10 may obtain the internal import statement of the project and an intra-file context based on a sub-diagram corresponding to the code generation task, where the intra-file context includes at least one of the library file import statement, a parent class of the code generation task, the preceding text in the first code file, or the subsequent text in the first code file. Then, the code development platform 10 obtains a dependency class of the parent class based on the internal import statement of the project, and obtains the first cross-file context based on the dependency class. The first cross-file context may include at least one of a member variable name, a method signature, a constant, and an access control keyword in the dependency class.

The code development platform 10 may also be aware of, through the API of the IDE, a code file that is in the project and that a developer focuses on, and extract a second cross-file context. In addition, the code development platform 10 may further obtain, through evolutionary correlation analysis, a code file with a high evolutionary coupling degree with a file in which the current code generation task is located, and extract a third cross-file context.

Stage 4: The code development platform 10 performs context filtering and sorting.

A project-level context may exceed a context limit of a language model. Therefore, the code development platform 10 may further generate information such as method descriptions, a method name, a return type, and a parameter type based on a requirement, and filter out, by using an identifier similarity, a part that is in the project-level context and that is most probably related to a current method. The code development platform 10 may sort contexts (for example, cross-file contexts with high relevance) that are filtered out. The code development platform 10 may further uniformly adjust the contexts that are filtered out to positions before the input information, to reduce a probability of truncation when the contexts are input into a code generation model, and increase, by reducing a distance, a weight of the context that is filtered out on method body generation.

Stage 5: The code development platform 10 performs context reorganization.

The code development platform 10 abstracts the cross-file context of a file, for example, removes information such as a comment, a variable assignment, and a method body from cross-file code, and reserves only a hierarchy structure and identifier information, to compress context information. In addition, the code development platform 10 abstracts the context code into a form of a syntax-compliant interface declaration, so that programming language syntax knowledge learned by a model in unsupervised pretraining can be reused. Then, the code development platform 10 may organize a position of each context in a prompt in descending order of context importance.

In comparison with adding the cross-file context only in the inference stage, this solution further supports alignment between a training task and an inference task, to focus on improving context awareness and utilization capabilities of the code generation model, and achieve a better effect and better experience in actual use. The code development platform 10 may obtain training data including the cross-file context, for example, training data including multi-dimensional cross-file contexts, and perform direct pretraining, multi-stage pretraining, or finetuning on a base model based on the training data, to obtain the code generation model. The following describes a model training process in the training stage with reference to embodiments.

In the training stage, this solution serves as a common training data processing solution and format between models. Therefore, this solution may be applied to pretraining the code generation model starting from random initialization, or may be used to perform targeted tuning training on an existing code generation model.

A core of this stage is multi-dimensional project-level context awareness. Different from a typical data processing method based on a source file, the solution in this application is based on a project, and specifically includes the following steps:
Step 1: Analyze a project structure of the entire project, and represent the project structure as a tree structure with a function/method as a leaf node.
Step 2: Filter out a leaf node that meets a standard.
   Specifically, a complete method that meets a specified condition is filtered out from a method of the project. The specified condition may include but is not limited to: A method body is not empty and the method is not special. A special method may be configured by a user. For example, the special method may include a method like get/set/constructor/toString/hashCode.
Step 3: For each method, determine a context range, extract information from a context, and perform anonymization processing.
Step 4: Use a project-level context in which each leaf node is located, a method comment (if the method comment exists), and a method signature as an input, and use method body code as an expected output, to form a piece of training data.
Step 5: After the foregoing processing is performed on methods in a plurality of software code repositories, the methods jointly form a training data set, and are used for model pretraining or tuning of an existing model.

The following separately describes possible implementation solutions in this application in a training stage from aspects such as model architecture, training manner, and data processing.

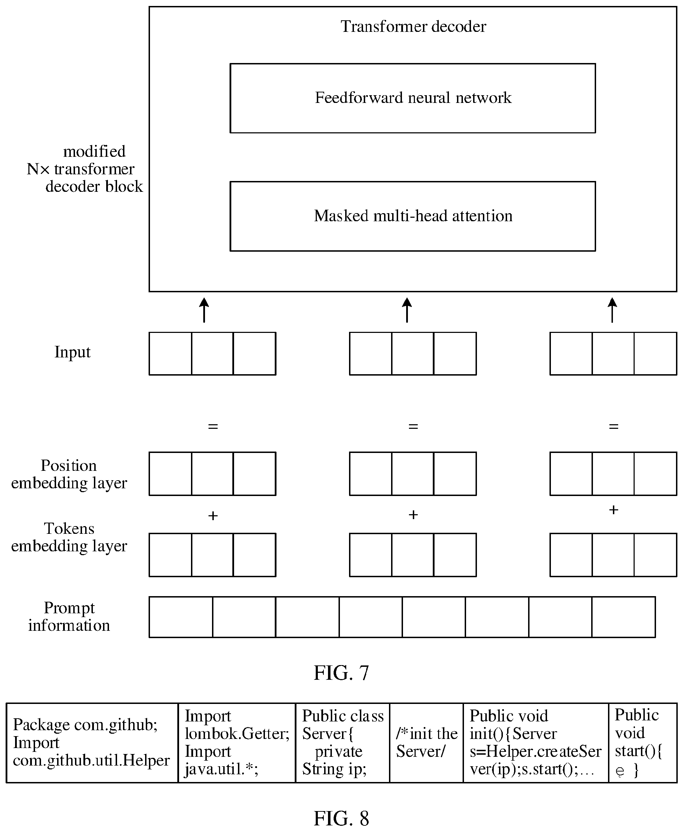

Considering that a causal language model based on a transformer decoder architecture has a good effect in the code generation field, in this solution, a GPT model is used as a base model to perform model training, to obtain a code generation model. FIG. 7 is a diagram of an architecture of a model based on a transformer decoder. The model may include a transformer decoder, a tokens embedding (tokens embedding) layer, and a position embedding (position embedding) layer. The decoder may include a feedforward neural network (feedforward neural network, FNN) and a masked multi-head attention (Masked Multi-head Attention) layer. Training data may be input to the transformer decoder for decoding after being encoded at the tokens embedding layer and the position embedding layer.

To adapt to an input format requirement of a GPT, context information usually needs to be processed into a sequence form, and a feature of a language model needs to be considered, to comply with a syntax rule of a programming language as much as possible.

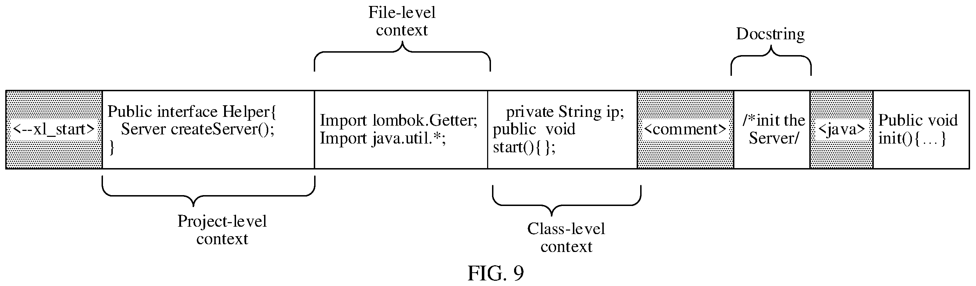

In a training stage, a current training manner is usually based on a single source code file, and training data/samples are generated by using a sliding window algorithm. FIG. 8 shows a structure of training data including a file-level context. The foregoing data includes only file-level context information within a specific range. To improve, in a targeted manner, capabilities of a model to be aware of and use project-level context information, the training data is processed by using the technologies described above, so that a context range is expanded, and context content is compressed. After context extraction is completed, different types of information are combined in a sequence of a project-level context, a file-level context, a class-level context, a method comment, and a method code snippet. Further, the code generation platform 10 may use special tokens (for example, <--x1_start-->, <comment>, or <java>) to mark start positions of different information, to formulate different loss update policies for different types of information during training. A format of a piece of processed training data may be shown in FIG. 9.

A process of converting the training data into a format of an operable tensor (Tensor) is similar to that of another model. Specifically, a specially constructed tokenizer (Tokenizer) and vocabulary (Vocab) are first used to convert each token (Token) in the training data into an index corresponding to the token in the vocabulary, to form a sequence of indexes corresponding to all tokens in the data in the vocabulary, and a vector representation of the corresponding token in a word embedding model is obtained through indexing (Word Embedding). Vector representations of a plurality of samples form a word embedding matrix and are sent to a base model for training.

A code generation model generally uses a pretrain-finetune (Pretrain-finetune) paradigm to perform model training and optimization. In a pretraining stage, the model needs to learn syntax and a pattern of a language through unsupervised training on a large quantity of corpuses. In a finetuning stage, the model needs to process, in a targeted manner, data based on a downstream task objective, and perform targeted optimization through supervised learning.

Based on different optimization objectives, this solution is applicable to different stages.

Direct pretraining (pretraining) means perform training directly starting from a randomly initialized model.

Multi-stage pretraining (multi-stage pretraining) means replacing data based on a pre-trained model, modifying a hyperparameter, and then continuing to perform training.

Finetuning (finetuning) means performing finetuning by using training methods such as instruction tuning (Instruction Tuning) and prompt tuning (Prompt Tuning) based on a pre-trained model.

In this solution, the model is trained by using a task of predicting a next token based on an existing token (Next Token Prediction), but only a loss value of a to-be-predicted target code part (for example, a part after <java> in FIG. 9) is calculated, and a model weight is updated by using the loss value of this part, to optimize, in a targeted manner, a prediction capability of the model for a code implementation part on a premise that the project-level context information and current method function descriptions are known.

The following describes the solutions of this application from perspectives of a front-end interface and human-machine interaction.

Same as a code generation tool and an intelligent programming assistant product of a same type, a main implementation form of this application is used as an extended function or a plug-in of a code editor or an IDE. Therefore, the front-end interface is embodied as a code generation, completion, or auxiliary coding tool embedded in the IDE. The following uses an IDE of a java language as an example to describe how to generate method-level code.

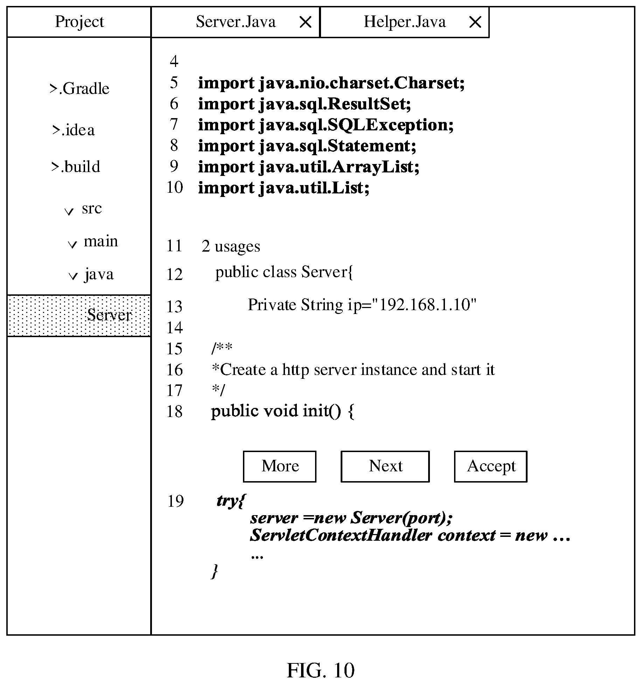

FIG. 10 is a diagram of a front-end interface of a code generation plug-in. After a user inputs a comment and a method declaration to trigger code generation, the code generation plug-in may perform the foregoing code generation method, to obtain generated code. The generated code may be method body code. The front-end interface may further include an accept control, a control for viewing a next group of generated code, and a control for recommending more generated code. The user may trigger a corresponding control to implement a corresponding function.

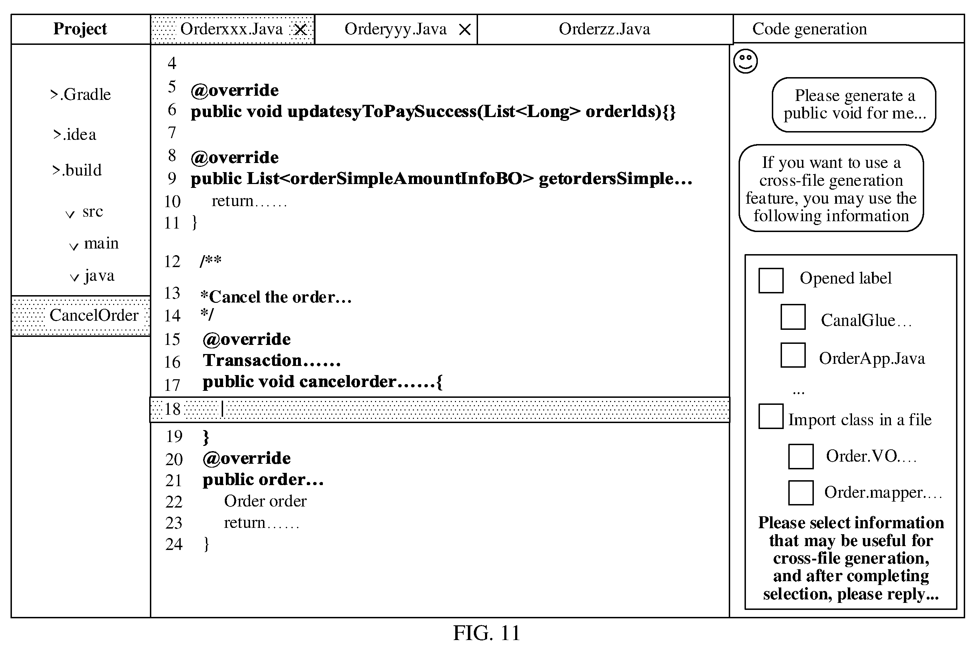

It should be noted that most code generation tools may provide experience shown in FIG. 10. Different from this type of tools, this solution provides the following options: allowing a user to perform explicit selection, and controlling a cross-file context that participates in code generation. As shown in FIG. 11, the front-end interface may support, in a form of a dialog, the user in explicitly selecting a cross-file context used for code generation.

How to integrate the intelligent programming assistant and capabilities of existing code development and management tools, how to make human-machine interaction logic of the programming assistant more suitable for a development habit of a developer, how to present a code generation technology and a product form of the programming assistant, and the like still need to be continuously explored in practice.

The following provides example descriptions of a human-machine interaction project.

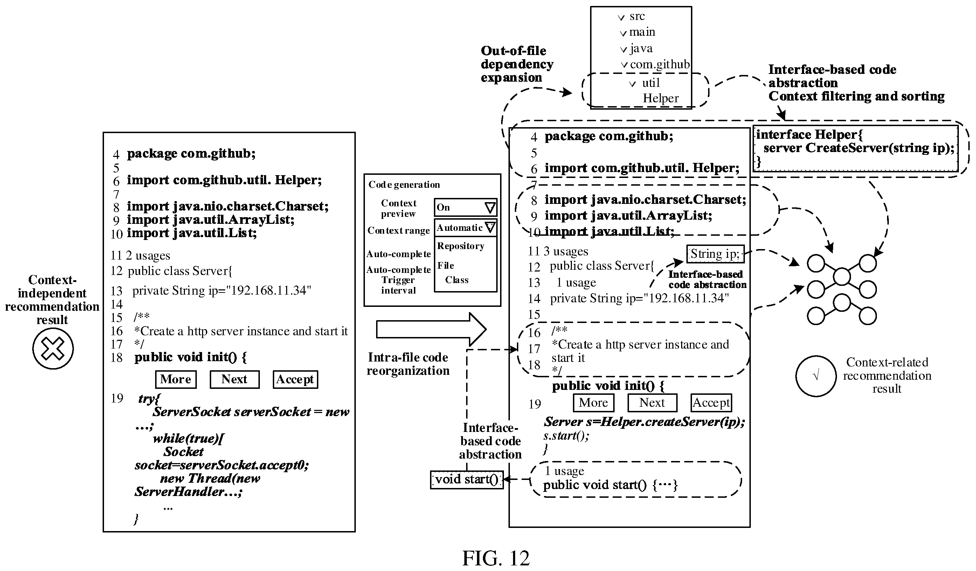

As shown in FIG. 12, currently, a tool of a same type generally sends, in a text form, only a context within a specific range near a code generation point in a current file as a request to a backend model for inference. For example, in the figure, a trigger position is after a signature of an init () method (that is, at this time, a cursor is at the beginning of line 19). If an input window of the backend model is 1024, a plug-in end inputs, into the model, a maximum of 1024 tokens before and after the position at which the cursor is located, including a method declaration of init (), a comment, a member variable declaration above init (), a class declaration statement, an import statement, and the like. A part of models (for example, InCoder of Meta) also allow other content under init () as an input. In this input, because most of obtained information is content of the current file, the model tends to generate a code implementation solution that appears frequently in training data, for example, directly use classes such as ServerSocket and ServerHandler for implementation from scratch. The result is extremely underlying and may include code from another project and an unimported dependency, and the result does not meet a user expectation.

If the project-level context awareness mechanism proposed in this solution is applied and configuration is performed based on the settings shown in FIG. 7, a code generation plug-in (a plug-in end) first analyzes a position of a current task point, and then separately performs the following steps.

Intra-file context analysis: First, content of the current file is partitioned into an internal import statement of a project, a standard library import statement, a third-party library import statement, a class to which the task point belongs, and a preceding text and a subsequent text in the current file. Out-of-file context analysis is used to perform dependency expansion and extraction on the internal import statement of the project. The standard library import statement and the third-party import statement are directly reserved as a part of an input. The preceding text and the subsequent text in the current file are directly reserved as a part of the input.

Out-of-file context analysis: Another class (or an interface type, an enumeration type, and the like) that is in the project and on which a current class depends is analyzed by using a package statement and an import statement, and content of the another class is expanded. A member variable name, a method signature, a constant, and an access control keyword (for example, public/private/default/friendly) that are defined in the another class are analyzed, and parts such as a specific assignment statement, an initialization block, and a method body are removed, to implement interface-based code abstraction. For context filtering and sorting, information that can be accessed by a generation point is filtered based on a relationship between a package in which a generation task is located and a package in which the current class is located. Then, the information that can be accessed is sorted based on a similarity between an identifier and a name/comment of a method in which the generation task is located.

For the example in FIG. 12, context information finally obtained by performing the foregoing steps includes: (1) a createServer () method declaration in a util.Helper class; (2) a java standard library to which the current file is imported; (3) a member variable ip of a current class Server declaration; and (4) a method start () that has been defined by current class Server after the generation point. The context information is added to a prompt information prompt and input to a code generation model. In this way, the code generation model can more easily generate code related to a context of a current project and reuse existing encapsulated code as much as possible, to better meet a user expectation.

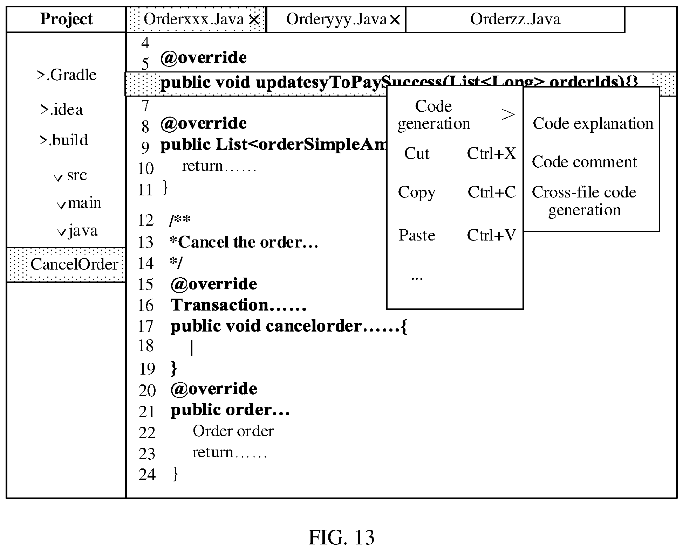

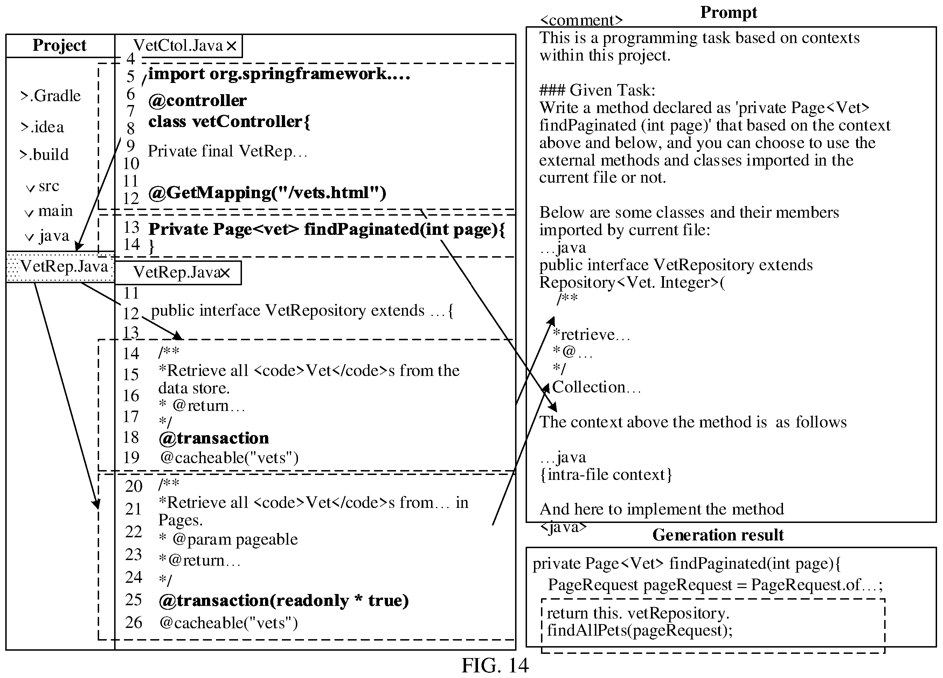

As shown in FIG. 13, a user right-clicks in an editing area to open a menu bar, and clicks "cross-file code generation" to trigger cross-file context extraction. Then, input information such as an extracted cross-file context and task description information of a code generation task is jointly combined into a prompt, and the combined prompt is sent to a code generation model for inference. A generated result is shown in FIG. 14. If the user accepts generated code, a current code generation task is completed.

It should be noted that, a core idea of this application is to achieve, on a premise that a supported input window of a code generation model based on a causal language model is limited, a balance between a requirement of the model on context information and security of local code/privacy data of the user to some extent by selectively being aware of project-level context information, thereby helping a developer better use a code generation tool to improve software development efficiency. With recent rapid technical and commercial development of code generation tools based on large models, more users start to focus on privacy and security problems in a use process. This application provides a good solution for the privacy and security problems, may be implemented as local IDE capabilities or plug-ins, or may be deployed and used in a form of a cloud service as functions of a cloud IDE.

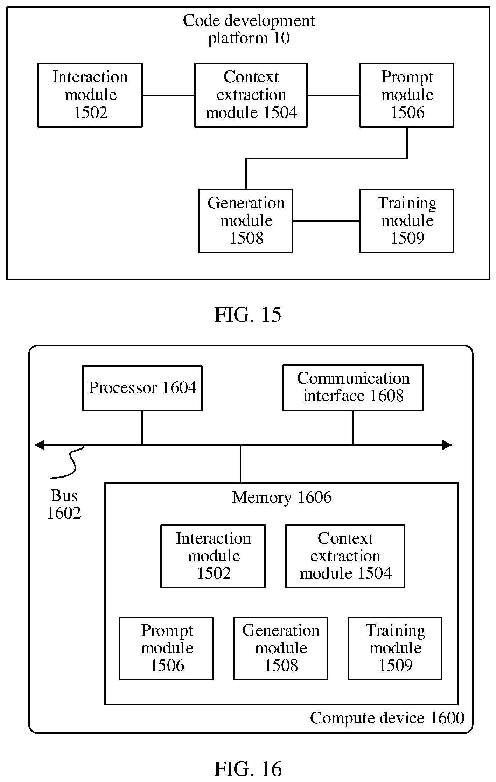

Based on the foregoing code generation method, this application further provides a code development platform 10. As shown in FIG. 15, the code development platform 10 includes:
an interaction module 1502, configured to receive input information of a user in a first code file in a project, where the input information includes at least one of task description information or input code of a code generation task;
a context extraction module 1504, configured to: obtain an intra-file context and a first cross-file context based on a static structure of the project, obtain a second cross-file context based on a behavior feature of the user in development of the project, and obtain a third cross-file context based on an evolutionary coupling degree between at least one second code file and the first code file in a code repository of the project, where the intra-file context is a context in the first code file, and the cross-file context is a context in a code file other than the first code file in the project;
a prompt module 1506, configured to generate prompt information based on the input information, the intra-file context, the first cross-file context, the second cross-file context, and the third cross-file context; and
a generation module 1508, configured to input the prompt information into a code generation model for inference, to obtain at least one group of generated code.

The interaction module 1502 is further configured to display the at least one group of generated code to the user.

The interaction module 1502, the context extraction module 1504, the prompt module 1506, and the generation module 1508 may be modules in the foregoing inference platform 100. For example, the interaction module 1502, the context extraction module 1504, the prompt module 1506, and the generation module 1508 may be implemented by hardware or software.

When the interaction module 1502, the context extraction module 1504, the prompt module 1506, and the generation module 1508 are implemented by the software, the interaction module 1502, the context extraction module 1504, the prompt module 1506, and the generation module 1508 may be applications run on a compute device, for example, a computing engine. The application program may be virtualized by using a virtualization service and then provided for the user to use. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts by using a virtualization technology, to provide a VM based on a requirement for the user to use. The BMS service is a service of virtualizing a BMS resource pool on a plurality of physical hosts to provide a BMS based on a requirement for the user to use. The container service is a service of virtualizing a container resource pool on a plurality of physical hosts to provide a container based on a requirement for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology that can provide lightweight virtualization to isolate user space, procedures, and resources. It should be understood that the VM service, the BMS service, and the container service in the virtualization service are merely used as specific examples. During actual application, the virtualization service may alternatively be another lightweight or heavyweight virtualization service. This is not specifically limited herein.

When the interaction module 1502, the context extraction module 1504, the prompt module 1506, and the generation module 1508 are implemented by the hardware, the interaction module 1502, the context extraction module 1504, the prompt module 1506, and the generation module 1508 may include at least one compute device, for example, a server. Alternatively, the interaction module 1502, the context extraction module 1504, the prompt module 1506, and the generation module 1508 may alternatively be devices implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

In some possible implementations, the context extraction module 1504 is specifically configured to:
obtain the second cross-file context based on at least one of metadata of an opened code file, edit frequency of a code file in the project, or a search record of the user in development of the project, where the metadata of the opened code file includes at least one of a class, a member, or a method in the opened code file, or a relative position relationship of an editor of the opened code file.

In some possible implementations, the context extraction module 1504 is further configured to:
obtain, through a behavior awareness interface, a behavior feature of the user in development of the project.

In some possible implementations, the context extraction module 1504 is further configured to:
obtain a commit record of the code repository; and
perform evolutionary coupling analysis on the at least one second code file and the first code file in the code repository of the project based on the commit record of the code repository, to obtain the evolutionary coupling degree between the at least one second code file and the first code file.

In some possible implementations, the context extraction module 1504 is specifically configured to:
construct a project structure diagram based on the static structure of the project, where the static structure includes a hierarchical structure of the project, the hierarchical structure includes a hierarchical relationship among a module, a package, a class, or a code block in the project, and the project structure diagram includes the hierarchical relationship and dependency information;
obtain, based on a position of the code generation task in the project structure diagram, a sub-diagram corresponding to the code generation task; and
obtain the intra-file context and the first cross-file context based on the sub-diagram corresponding to the code generation task.

In some possible implementations, the context extraction module 1504 is specifically configured to:
obtain an internal import statement of the project and the intra-file context based on the sub-diagram corresponding to the code generation task, where the intra-file context includes at least one of a library file import statement, a parent class of the code generation task, a preceding text in the first code file, or a subsequent text in the first code file; and
obtain a dependency class of the parent class based on the internal import statement of the project, and obtain the first cross-file context based on the dependency class, where the first cross-file context includes at least one of a member variable name, a method signature, a constant, and an access control keyword in the dependency class.

In some possible implementations, the prompt module 1506 is specifically configured to:
abstract at least one of the intra-file context, the first cross-file context, the second cross-file context, or the third cross-file context into a syntax-compliant interface declaration; and
generate the prompt information based on the input information and the interface declaration through prompt engineering.

In some possible implementations, the prompt module 1506 is further configured to:
sort cross-file contexts based on at least one of access permission, a topology distance, edit frequency, a semantic similarity, or an evolutionary coupling degree.

The prompt module 1506 is specifically configured to:
assemble the input information, the intra-file context, the first cross-file context, the second cross-file context, and the third cross-file context with reference to a sorting result of the cross-file contexts, to obtain the prompt information.

In some possible implementations, the prompt module 1506 is specifically configured to:
add start flags to different types of information in the input information, the intra-file context, the first cross-file context, the second cross-file context, and the third cross-file context, to generate the prompt information.

In some possible implementations, the code development platform 10 further includes:
a training module 1509, configured to: obtain training data including the cross-file contexts, and perform direct pretraining, multi-stage pretraining, or finetuning on a base model based on the training data, to obtain the code generation model.

The training module 1509 may be a module in the foregoing training platform 200. For example, the training module 1509 may be implemented by hardware or software.

When the training module 1509 is implemented by the software, the training module 1509 may be an application run on a compute device, for example, a VM service, a BMS service, or a container service. When the training module 1509 is implemented by the hardware, the training module 1509 may include at least one compute device, for example, a server. Alternatively, the training module 1509 may be a device implemented by using an ASIC or a PLD, or the like.

This application further provides a compute device 1600. As shown in FIG. 16, the compute device 1600 includes a bus 1602, a processor 1604, a memory 1606, and a communication interface 1608. The processor 1604, the memory 1606, and the communication interface 1608 communicate with each other through the bus 1602. The compute device 1600 may be a server or a terminal device. It should be understood that quantities of processors and memories in the compute device 1600 are not limited in this application.

The bus 1602 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 16, but it does not indicate that there is only one bus or only one type of bus. The bus 1602 may include a path for transmitting information between components (for example, the memory 1606, the processor 1604, and the communication interface 1608) of the compute device 1600.

The processor 1604 may include any one or more of a central processing unit (central processing unit, CPU), a graphics processing unit (graphics processing unit, GPU), a microprocessor (microprocessor, MP), a digital signal processor (digital signal processor, DSP), or other processors.

The memory 1606 may include a volatile memory (volatile memory), for example, a random access memory (random access memory, RAM). Alternatively, the memory 1606 may include a non-volatile memory (non-volatile memory), for example, a read-only memory (read-only memory, ROM), a flash memory, a hard disk drive (hard disk drive, HDD), or a solid-state drive (solid-state drive, SSD). The memory 1606 stores executable program code, and the processor 1604 executes the executable program code to implement the foregoing code generation method. Specifically, the memory 1606 stores instructions used by the code development platform 10 to perform the code generation method.

The communication interface 1608 uses a transceiver module, for example, but not limited to, a network interface card or a transceiver, to implement communication between the compute device 1600 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

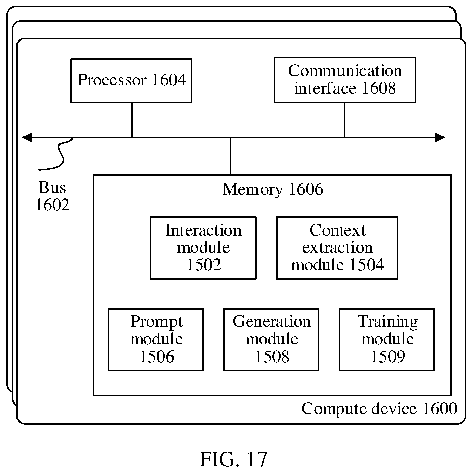

As shown in FIG. 17, the compute device cluster includes at least one compute device 1600. A memory 1606 in one or more compute devices 1600 in the compute device cluster may store same instructions used by a code development platform 10 to perform a code generation method.

In some possible implementations, the one or more compute devices 1600 in the compute device cluster may alternatively be configured to execute a part of the instructions used by the code development platform 10 to perform the code generation method. In other words, a combination of the one or more compute devices 1600 may jointly execute the instructions used by the code development platform 10 to perform the code generation method.

It should be noted that memories 1606 in different compute devices 1600 in the compute device cluster may store different instructions, and are configured to perform a part of functions of the code development platform 10.

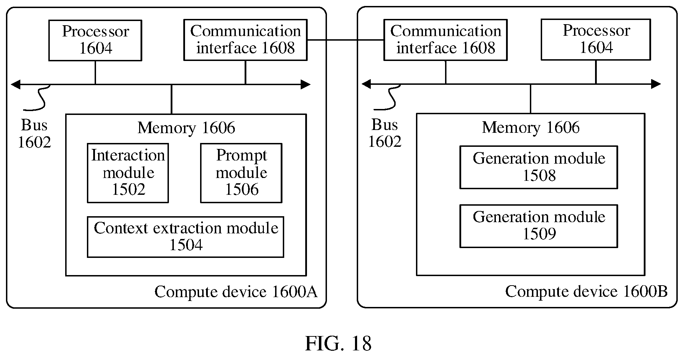

FIG. 18 shows a possible implementation. As shown in FIG. 18, two compute devices 1600A and 1600B are connected through a communication interface 1608. A memory in the compute device 1600A stores instructions used to perform functions of an interaction module 1502, a context extraction module 1504, and a prompt module 1506. A memory in the compute device 1600B stores instructions used to perform a function of a generation module 1508. Optionally, the memory in the compute device 1600B further stores instructions used to perform a function of a training module 1509. In other words, memories 1606 in the compute devices 1600A and 1600B jointly store instructions used by a code development platform 10 to perform a code generation method.

A connection manner between compute device clusters shown in FIG. 18 may be that, considering that the code generation method provided in this application needs a large amount of computational power to perform model inference, it is considered that the function implemented by the generation module 1508 for model inference is performed by the compute device 1600B.

It should be understood that functions of the compute device 1600A shown in FIG. 18 may alternatively be implemented by a plurality of compute devices 1600. Similarly, functions of the compute device 1600B may alternatively be implemented by a plurality of compute devices 1600.

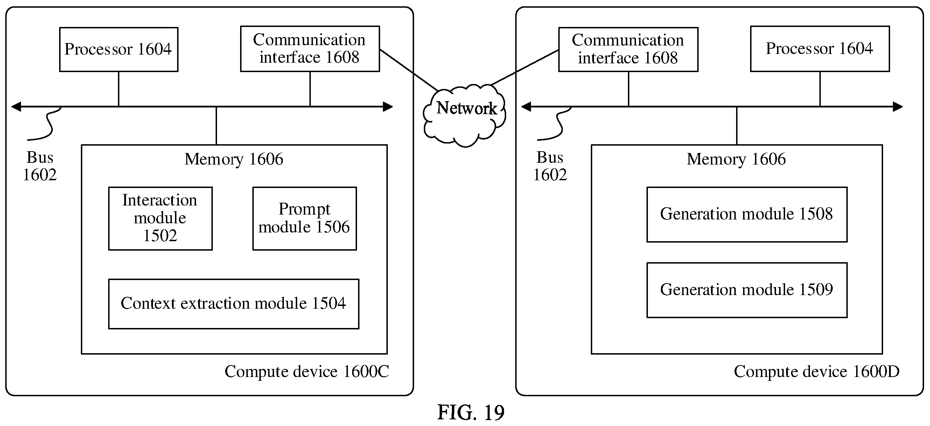

In some possible implementations, one or more compute devices in the compute device cluster may be connected through a network. The network may be a wide area network, a local area network, or the like. FIG. 19 shows a possible implementation. As shown in FIG. 19, two compute devices 1600C and 1600D are connected through a network. Specifically, each compute device is connected to the network through a communication interface in the compute device. In this possible implementation, a memory 1606 in the compute device 1600C stores instructions for performing functions of an interaction module 1502, a context extraction module 1504, and a prompt module 1506. In addition, a memory 1606 in the compute device 1600D stores instructions for performing a function of a generation module 1508.

A connection manner between compute device clusters shown in FIG. 19 may be that, considering that the code generation method provided in this application needs a large amount of computational power to perform model inference to generate code, it is considered that the function implemented by the generation module 1508 is performed by the compute device 1600D.

It should be understood that functions of the compute device 1600C shown in FIG. 19 may alternatively be implemented by a plurality of compute devices 1600. Similarly, functions of the compute device 1600D may alternatively be implemented by a plurality of compute devices 1600.

An embodiment of this application further provides a computer-readable storage medium. The computer-readable storage medium may be any usable medium that can be stored in a compute device, or a data storage device like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the compute device to perform the code generation method applied to the code development platform 10.

An embodiment of this application further provides a computer program product including instructions. The computer program product may be software or a program product that includes instructions and that can run on a compute device or can be stored in any usable medium. When the computer program product runs on at least one compute device, the at least one compute device is caused to perform the foregoing code generation method.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may still be made to a part of technical features thereof, without departing from the protection scope of the technical solutions of embodiments of the present invention.

## Claims

1. A code generation method, wherein the method comprises:
receiving, by a code development platform, input information of a user in a first code file in a project, wherein the input information comprises at least one of task description information or input code of a code generation task;
obtaining, by the code development platform, an intra-file context and a first cross-file context based on a static structure of the project, obtaining a second cross-file context based on a behavior feature of the user in development of the project, and obtaining a third cross-file context based on an evolutionary coupling degree between at least one second code file and the first code file in a code repository of the project, wherein the intra-file context is a context in the first code file, and the cross-file context is a context in a code file other than the first code file in the project;
generating, by the code development platform, prompt information based on the input information, the intra-file context, the first cross-file context, the second cross-file context, and the third cross-file context;
inputting, by the code development platform, the prompt information into a code generation model for inference, to obtain at least one group of generated code; and
displaying, by the code development platform, the at least one group of generated code to the user.

2. The method according to claim 1, wherein the obtaining the second cross-file context based on the behavior feature of the user in development of the project comprises:
obtaining, by the code development platform, the second cross-file context based on at least one of metadata of an opened code file, edit frequency of a code file in the project, or a search record of the user in development of the project, wherein the metadata of the opened code file comprises at least one of a class, a member, or a method in the opened code file, or a relative position relationship of an editor of the opened code file.

3. The method according to claim 2, wherein the method further comprises:
obtaining, by the code development platform through a behavior awareness interface, the behavior feature of the user in development of the project.

4. The method according to claim 1, wherein the method further comprises:
obtaining, by the code development platform, a commit record of the code repository; and
performing, by the code development platform, evolutionary coupling analysis on the at least one second code file and the first code file in the code repository of the project based on the commit record of the code repository, to obtain the evolutionary coupling degree between the at least one second code file and the first code file.

5. The method according to claim 1, wherein the obtaining, by the code development platform, the intra-file context and the first cross-file context based on the static structure of the project comprises:
constructing, by the code development platform, a project structure diagram based on the static structure of the project, wherein the static structure comprises a hierarchical structure of the project, the hierarchical structure comprises a hierarchical relationship among a module, a package, a class, or a code block in the project, and the project structure diagram comprises the hierarchical relationship and dependency information;
obtaining, by the code development platform based on a position of the code generation task in the project structure diagram, a sub-diagram corresponding to the code generation task; and
obtaining, by the code development platform, the intra-file context and the first cross-file context based on the sub-diagram corresponding to the code generation task.

6. The method according to claim 5, wherein the obtaining, by the code development platform, the intra-file context and the first cross-file context based on the sub-diagram corresponding to the code generation task comprises:
obtaining, by the code development platform, an internal import statement of the project and the intra-file context based on the sub-diagram corresponding to the code generation task, wherein the intra-file context comprises at least one of a library file import statement, a parent class of the code generation task, a preceding text in the first code file, or a subsequent text in the first code file; and
obtaining, by the code development platform, a dependency class of the parent class based on the internal import statement of the project, and obtaining the first cross-file context based on the dependency class, wherein the first cross-file context comprises at least one of a member variable name, a method signature, a constant, and an access control keyword in the dependency class.

7. The method according to any one of claims 1 to 6, wherein the generating, by the code development platform, the prompt information based on the input information, the intra-file context, the first cross-file context, the second cross-file context, and the third cross-file context comprises:
abstracting at least one of the intra-file context, the first cross-file context, the second cross-file context, or the third cross-file context into a syntax-compliant interface declaration; and
generating the prompt information based on the input information and the interface declaration through prompt engineering.

8. The method according to any one of claims 1 to 7, wherein the method further comprises:
sorting, by the code development platform, the cross-file contexts based on at least one of access permission, a topology distance, edit frequency, a semantic similarity, or an evolutionary coupling degree; and
the generating, by the code development platform, the prompt information based on the input information, the intra-file context, the first cross-file context, the second cross-file context, and the third cross-file context comprises:
assembling, by the code development platform, the input information, the intra-file context, the first cross-file context, the second cross-file context, and the third cross-file context with reference to a sorting result of the cross-file contexts, to obtain the prompt information.

9. The method according to any one of claims 1 to 8, wherein the generating, by the code development platform, the prompt information based on the input information, the intra-file context, the first cross-file context, the second cross-file context, and the third cross-file context comprises:
adding, by the code development platform, start flags to different types of information in the input information, the intra-file context, the first cross-file context, the second cross-file context, and the third cross-file context, to generate the prompt information.

10. The method according to any one of claims 1 to 9, wherein the code generation model is obtained in the following manner:
obtaining training data comprising the cross-file contexts; and
performing direct pretraining, multi-stage pretraining, or finetuning on a base model based on the training data, to obtain the code generation model.

11. A code development platform, wherein the code development platform comprises:
an interaction module, configured to receive input information of a user in a first code file in a project, wherein the input information comprises at least one of task description information or input code of a code generation task;
a context extraction module, configured to: obtain an intra-file context and a first cross-file context based on a static structure of the project, obtain a second cross-file context based on a behavior feature of the user in development of the project, and obtain a third cross-file context based on an evolutionary coupling degree between at least one second code file and the first code file in a code repository of the project, wherein the intra-file context is a context in the first code file, and the cross-file context is a context in a code file other than the first code file in the project;
a prompt module, configured to generate prompt information based on the input information, the intra-file context, the first cross-file context, the second cross-file context, and the third cross-file context; and
a generation module, configured to input the prompt information into a code generation model for inference, to obtain at least one group of generated code, wherein
the interaction module is further configured to display the at least one group of generated code to the user.

12. The code development platform according to claim 11, wherein the context extraction module is specifically configured to:
obtain the second cross-file context based on at least one of metadata of an opened code file, edit frequency of a code file in the project, or a search record of the user in development of the project, wherein the metadata of the opened code file comprises at least one of a class, a member, or a method in the opened code file, or a relative position relationship of an editor of the opened code file.

13. The code development platform according to claim 12, wherein the context extraction module is further configured to:
obtain, through a behavior awareness interface, the behavior feature of the user in development of the project.

14. The code development platform according to claim 11, wherein the context extraction module is further configured to:
obtain a commit record of the code repository; and
perform evolutionary coupling analysis on the at least one second code file and the first code file in the code repository of the project based on the commit record of the code repository, to obtain the evolutionary coupling degree between the at least one second code file and the first code file.

15. The code development platform according to claim 11, wherein the context extraction module is specifically configured to:
construct a project structure diagram based on the static structure of the project, wherein the static structure comprises a hierarchical structure of the project, the hierarchical structure comprises a hierarchical relationship among a module, a package, a class, or a code block in the project, and the project structure diagram comprises the hierarchical relationship and dependency information;
obtain, based on a position of the code generation task in the project structure diagram, a sub-diagram corresponding to the code generation task; and
obtain the intra-file context and the first cross-file context based on the sub-diagram corresponding to the code generation task.

16. The code development platform according to claim 15, wherein the context extraction module is specifically configured to:
obtain an internal import statement of the project and the intra-file context based on the sub-diagram corresponding to the code generation task, wherein the intra-file context comprises at least one of a library file import statement, a parent class of the code generation task, a preceding text in the first code file, or a subsequent text in the first code file; and
obtain a dependency class of the parent class based on the internal import statement of the project, and obtain the first cross-file context based on the dependency class, wherein the first cross-file context comprises at least one of a member variable name, a method signature, a constant, and an access control keyword in the dependency class.

17. The code development platform according to any one of claims 11 to 16, wherein the prompt module is specifically configured to:
abstract at least one of the intra-file context, the first cross-file context, the second cross-file context, or the third cross-file context into a syntax-compliant interface declaration; and
generate the prompt information based on the input information and the interface declaration through prompt engineering.

18. The code development platform according to any one of claims 11 to 17, wherein the prompt module is further configured to:
sort the cross-file contexts based on at least one of access permission, a topology distance, edit frequency, a semantic similarity, or an evolutionary coupling degree; and
the prompt module is specifically configured to:
assemble the input information, the intra-file context, the first cross-file context, the second cross-file context, and the third cross-file context with reference to a sorting result of the cross-file contexts, to obtain the prompt information.

19. The code development platform according to any one of claims 11 to 18, wherein the prompt module is specifically configured to:
add start flags to different types of information in the input information, the intra-file context, the first cross-file context, the second cross-file context, and the third cross-file context, to generate the prompt information.

20. The code development platform according to any one of claims 11 to 19, wherein the code development platform further comprises:
a training module, configured to: obtain training data comprising the cross-file contexts, and perform direct pretraining, multi-stage pretraining, or finetuning on a base model based on the training data, to obtain the code generation model.

21. A compute device cluster, wherein the compute device cluster comprises at least one compute device, the at least one compute device comprises at least one processor and at least one memory, the at least one memory stores computer-readable instructions, and the at least one processor executes the computer-readable instructions, to cause the compute device cluster to perform the code generation method according to any one of claims 1 to 10.

22. A computer-readable storage medium, comprising computer-readable instructions, wherein the computer-readable instructions are used to implement the code generation method according to any one of claims 1 to 10.

23. A computer program product, comprising computer-readable instructions, wherein the computer-readable instructions are used to implement the code generation method according to any one of claims 1 to 10.
